# EUROPÄISCHE PATENTANMELDUNG

(11) **EP 4 703 692 A1**
(43) Veröffentlichungstag der Anmeldung: **04.03.2026**
(21) Anmeldenummer: 25173603.9
(22) Anmeldetag: 30.04.2025
(51) Int. Cl.: G01F 17/00, G01F 22/00

(54) **VOLUMENMESSUNG IN EINEM GASSPEICHER UND GASSPEICHER**

(30) Priorität: 28.08.2024 DE 102024124606
(71) Anmelder: JOPE Beteiligungs GmbH, 87653 Eggenthal (DE)
(72) Erfinder: Baur, Josef, 87653 Eggenthal (DE); Baur, Peter, 87653 Eggenthal (DE)
(74) Vertreter: Patentanwälte Olbricht Buchhold Keulertz

(57) **Zusammenfassung**

Die Erfindung betrifft ein Verfahren zur Volumenmessung eines ersten Gasraums und/oder eines zweiten Gasraums in einem Gasspeicher (10) mit einer Außenhülle (30). Im Rahmen dieses Verfahrens wird der von mindestens einer beweglichen Membran (20) begrenzte erste Gasraums (G1) mit einem ersten Gas befüllt. Der durch die mindestens eine bewegliche Membran (20) abgegrenzte zweite Gasraum (G2) wird mit einem zweiten Gas befüllt. Sobald die Gasräume befüllt sind, erfolgt eine Positionsbestimmung der den ersten Gasraum (G1) und den zweiten Gasraum (G2) trennenden, Membran (20). Anhand der ermittelten Positionswerte wird das Volumens des ersten Gasraums (G1) und/oder des zweiten Gasraums (G2) berechnet. Für die Positionsbestimmung bildet die bewegliche Membran (20) eine Fläche aus, welche eine Ebene (E) definiert, wobei die Ebene (E) die Grenze zwischen dem ersten Gasraum (G1) und dem zweiten Gasraum (G2) ist oder bildet. Die Position der Membran innerhalb des Gasspeichers (10) wird zudem in Bezug auf wenigstens einen Messpunkt (M1/M2) ermittelt, wobei vorzugsweise ein optisches, mechanisches, akustisches und/oder elektrisches Messverfahren verwendet wird.

## Beschreibung

Die Erfindung betrifft ein Verfahren zur Volumenmessung in einem Gasspeicher gemäß Anspruch 1 und einen Gasspeicher gemäß Anspruch 11.

Gasspeicher, insbesondere solche für Biogas, Erdgas oder Wasserstoff sind bekannt.

Im Stand der Technik sind zudem Verfahren beschrieben, um das in ihnen gespeicherte Gasvolumen zu bestimmen. Dabei werden, über optische oder mechanische Verfahren, die Position einer das Gasvolumen begrenzenden Membran ermittelt und daraus Rückschlüsse auf das umschlossene Volumen gezogen. Insbesondere bei nicht homogenen Gasverteilungen im Gasraum stoßen diese Methoden an ihre Grenzen. Insbesondere Gase, die leichter sind als Luft, verursachen im Speicher eine Auftriebskraft, was dazu führt, dass sich eine Blase ausbildet. Das Gasvolumen ist dadurch nur schwer messbar, weil eine Korrelation zwischen der messbaren Speicherhöhe und dem beinhalteten Volumen kaum möglich ist. Für die Betreiber eines Gasspeichers ist es jedoch wichtig, den Gasvorrat möglichst genau zu kennen.

Aufgabe der Erfindung ist es, den Stand der Technik zu verbessern.

Die Aufgabe ist erfindungsgemäß gelöst mit einem Verfahren zur Volumenmessung in einem Gasspeicher gemäß Anspruch 1 sowie mit einem Gasspeicher gemäß Anspruch 11.

Ausgestaltungen sind Gegenstand der Unteransprüche und der Ausführungsformen.

Erfindungsgemäß wird ein Verfahren zur Volumenmessung eines ersten Gasraums und eines zweiten Gasraums in einem Gasspeicher mit einer Außenhülle vorgeschlagen, wobei das Verfahren umfasst:
▪ Befüllen des, von mindestens einer beweglichen Membran begrenzten, ersten Gasraums mit einem ersten Gas,
▪ Befüllen des, durch die mindestens eine bewegliche Membran abgegrenzten, zweiten Gasraums mit einem zweiten Gas,
▪ Positionsbestimmung der, den ersten Gasraum und den zweiten Gasraum trennenden, Membran,
▪ Berechnung des Volumens des ersten Gasraums und des zweiten Gasraums anhand der Position der Membran innerhalb des Gasspeichers.

Das Volumen von nicht-statischen Gasräumen zu bestimmen, wird erfindungsgemäß so gelöst, dass eine präzise Bestimmung der dynamischen Komponente des Gasraums erfolgt. Dabei umfasst der erfindungsgemäße Vorschlag ein Verfahren wie exakt beschrieben sowie einen Vorschlag, bei dem zunächst der zweite Gasraum mit einem zweiten Gas befüllt wird, bevor der erste Gasraum mit einem ersten Gas gefüllt wird.

In einer möglichen Ausgestaltung ist die Außenhülle als mehrlagiges Membrandach ausgeführt und mit Druck beaufschlagt, um eine konstante Form zu gewährleisten womit das Verfahren wie beschrieben durchgeführt wird.

In einer anderen Ausgestaltung ist die Membran in der Außenhülle ausgebildet und das Verfahren wird gemäß dem anderen Vorschlag durchgeführt, wobei die Füllung des zweiten Gasraumes zuerst erfolgt und die in der Außenhülle liegende Membran non dem eingefüllten zweiten Gas gestützt wird.

Das erfindungsgemäße Verfahren findet vorzugsweise Anwendung bei der Speicherung von Gasen, die ein geringeres spezifisches Gewicht haben als die den Speicher umgebende Luft, beispielsweise Erdgas oder Wasserstoff, wobei die Funktion der Gasräume innerhalb des Gasspeichers umgekehrt wird. Der erste Gasraum zur Speicherung des ersten, vorzugsweise leichteren Gases ist oberhalb des zweiten Gasraumes ausgebildet, der ein zweites Gas mit einem höheren spezifischen Gewicht aufnimmt. Dadurch befindet sich das schwere Gas unterhalb des leichten Gases, wobei die beiden Gasräume und damit die beiden Gase von der beweglichen Membran getrennt sind. Befüllt man nun die Gasräume von oben nach unten, wird die Membran von dem zweiten, schweren Gas gestützt und dadurch in eine nahezu waagrechte Ebene gebracht, deren Position innerhalb des Gasspeichers messbar ist. Auf Basis dieser Messwerte kann das Volumen des zweiten Gases sehr präzise berechnet werden.

Typischerweise bildet die bewegliche Membran eine Fläche aus, welche eine Ebene definiert.

Damit die Membran zuverlässig eine Ebene ausbildet, ist es von Vorteil, wenn eine Vorrichtung in dem Gasspeicher vorgesehen ist, welche die Membran unter Spannung hält. Alternativ kann die Membran eine Eigenspannung aufweisen oder so ausgeführt sein, dass sie sich durch ihr Eigengewicht auf Spannung und damit glatt zieht.

In einer besonders vorteilhaften Ausbildung ist die Ebene die Grenze zwischen dem ersten Gasraum und dem zweiten Gasraum.

Die Schwierigkeiten bei der Volumenbestimmung dynamischer Gasräume rühren in erster Linie davon, dass die sie begrenzenden Membranen keine definierte Form annehmen. Insbesondere leichte Gase neigen zur Bildung einer Blase in der Membran, welche eine präzise Volumenbestimmung unmöglich macht. Durch die Ausbildung einer Ebene kann deren Position präzise ermittelt und daraus das Volumen bestimmt werden.

Gemäß einer Weiterbildung wird die Position der Membran innerhalb des Gasspeichers in Bezug auf wenigstens einen Messpunkt ermittelt.

In einer Variante ist der wenigstens eine Messpunkt durch einen höchsten Punkt des Gasspeichers definiert.

In einer anderen Variante ist der wenigstens eine Messpunkt durch einen niedrigsten Punkt des Gasspeichers definiert, vorzugsweise durch eine Grundfläche im Gasspeicher.

Bei bekanntem Abstand zu einem festen Bezugspunkt kann das Volumen der von der Membran getrennten Gasräume präzise bestimmt werden, weil die äußere Form des Gasspeichers bekannt ist.

Typischerweise wird die Position der Membran über ein optisches, mechanisches, akustisches und/oder elektrisches Verfahren erfasst und/oder ermittelt.

In einer besonders vorteilhaften Variante ist das Verfahren zur Abstandsmessung eine Laserabstandsmessung.

Gemäß einer Weiterbildung ist das erste Gas leichter als das zweite Gas.

In einer anderen Weiterbildung wird der erste Gasraum mit dem leichten Gas befüllt.

In einer Variante bildet der zweiten Gasraum einen Stützgasraum aus.

In einer weiteren Variante wird der zweites Gasraum mit dem zweiten Gas als Stützgas befüllt.

In einer besonders vorteilhaften Variante ist das zweite gas Luft.

Wird der erste Gasraum mit dem ersten leichten Gas befüllt, während sich im zweiten Gasraum das zweite schwere Gas befindet, wird die trennende bewegliche Membran aufgrund der unterschiedlichen Raumgewichte der Gase in einer nahezu waagrechten Ebene gehalten. Die Höhe dieser Ebene und damit die Höhe der Membran gegenüber einem Bezugspunkt kann gemessen werden. Anhand dieses Messwerts kann das Speichervolumen des ersten Gasraums und/oder des zweiten Gasraums relativ genau bestimmt werden.

Typischerweise wird eine Positionsbestimmung vor und/oder nach dem Einleiten und/oder Ausleiten eines Gases in den Gasspeicher durchgeführt.

Vorteilhafterweise wird die Positionsbestimmung in Echtzeit durchgeführt.

In einer besonders vorteilhaften Ausbildung werden die Gase von oberhalb und/oder unterhalb der Membran in die Gasräume eingeleitet.

Ein Einleiten der Gase in die jeweiligen Gasräume von ober- bzw. unterhalb der Membran sorgt für eine schnelle und gleichmäßige Ausbildung der von der beweglichen Membran ausgebildeten Trennebene.

In einer Weiterbildung wird das erste Gas über eine Zuleitung im Bereich oberhalb der Membran in den ersten Gasraum geleitet.

In einer anderen Weiterbildung wird das zweite Gas über eine Zuleitung im Bereich unterhalb der Membran in den zweiten Gasraum geleitet.

Typischerweise findet eine Druckmessung in den Gasräumen statt.

Bei dynamischen Gasräumen übt das dynamische Element, in diesem Fall die Membran, durchaus einen Druck auf des gespeicherte Volumen aus. Daher ist für eine präzise Volumenbestimmung eine Druckmessung von Vorteil.

Vorteilhafterweise wird die Druckmessung in Echtzeit durchgeführt.

In einer Variante wird beim Einlassen von Gas in den ersten Gasraum Gas aus dem zweiten Gasraum entfernt oder abgelassen. Umgekehrt wird beim Entnehmen von Gas aus dem ersten Gasraum Gas in den zweiten Gasraum eingelassen. Auf diese Weise ist sichergestellt, dass sich die bewegliche Membran stets in einer definierten Ebene bewegt, deren Höhe relativ zu einem Messpunkt ermittelt wird.

In einer weiteren Variante werden die gemessenen Drücke über Zu- bzw. Abfuhr von Gas in mindestens einen Gasraum, umfassend die Gruppe bestehend aus dem ersten Gasraum und dem zweiten Gasraum, auf einen Sollwert geregelt.

In einer Weiterbildung wird bei einem definiertem Überdruck das zweite Gas aus dem zweiten Gasraum über ein Rückschlagventil in der Zuleitung abgeführt oder abgelassen. Bei einem definiertem Unterdruck wird das zweite Gas in den zweiten Gasraum über das Rückschlagventil in der Zuleitung zugeführt oder eingelassen.

In einer besonders vorteilhaften Variante wird beim Einleiten und/oder Ausleiten von Gas in den ersten und/oder zweiten Gasraum das eingeleitete und/oder ausgeleitete Volumen bestimmt, vorzugsweise mittels einer Volumenstrommessung.

Typischerweise liegt die Summe der Volumina der zwei Gasräume im Bereich eines definierten Wertes.

In einer Weiterbildung wird beim Überschreiten des Wertes Gas aus dem zweiten Gasraum (G2) entfernt.

In einer anderen Weiterbildung wird bei Unterschreitung des Wertes Gas in mindestens einen Gasraum, umfassend die Gruppe bestehend aus dem ersten Gasraum und dem zweiten Gasraum, geleitet.

Der erfindungsgemäße Vorschlag umfasst einen Gasspeicher zum Speichern von Gas, mit einer Außenhülle, in der zumindest zwei Kammern ausgebildet sind, die mittels einer Membran voneinander getrennt sind, wobei eine erste Kammer als erster Gasraum und eine zweite Kammer als zweiter Gasraum ausgebildet sind, dadurch gekennzeichnet, dass das Volumen zumindest eines Gasraums über die Position der Membran innerhalb der Außenhülle bestimmbar ist. Auch dies trägt dazu bei, dass sich die bewegliche Membran stets zuverlässig einer messbaren Ebene befindet und dass sich darüber das Volumen in den Gasräumen exakt berechnen lässt.

Vorteilhafterweise ist der erste Gasraum oberhalb des zweiten Gasraums ausgebildet.

Typischerweise verläuft die Membran im Wesentlichen horizontal zwischen den Gasräumen.

In einer Weiterbildung ist der zweite Gasraum als Stützgasraum für die Membran ausgebildet.

In einer anderen Weiterbildung ist wenigstens eine Vorrichtung zur Bestimmung der Position der Membran innerhalb der Außenhülle vorhanden.

Typischerweise ist wenigstens ein Druckmesser zur Bestimmung des Drucks innerhalb der Gasräume vorhanden.

In einer Variante ist in jeder Zuleitung wenigstens eine Vorrichtung zur Bestimmung des zu- und/oder abgeführten Gasvolumens vorhanden.

Vorteilhafterweise ist eine Auswerteeinheit zu Berechnung des Gasvolumens des ersten und/oder des zweiten Gasraums vorhanden.

Gemäß einer Variante verwendet die Auswerteeinheit die von der Vorrichtung und/oder dem Druckmesser ermittelten Positionswerte der Membran für die Berechnung des Gasvolumens oder der Gasvolumen.

In einer weiteren Variante ist eine Anzeigevorrichtung vorgesehen, welche die von der Auswerteeinheit berechneten Gasvolumen anzeigt.

Als erfindungsgemäße Lösung wird ferner ein Gasspeicher zum Speichern von Gas vorgeschlagen, mit einer Außenhülle, in der zumindest zwei Kammern ausgebildet sind, die mittels einer Membran voneinander getrennt sind, wobei eine erste Kammer als erster Gasraum und eine zweite Kammer als zweiter Gasraum ausgebildet sind, und wobei das Volumen zumindest eines Gasraums über die Position der Membran innerhalb der Außenhülle bestimmbar ist.

Der erste Gasraum ist vorzugsweise oberhalb des zweiten Gasraums ausgebildet, wobei die Membran im Wesentlichen horizontal zwischen den Gasräumen verläuft und wobei der zweite Gasraum als Stützgasraum für die Membran ausgebildet ist.

Eine weitere wichtige Ausführungsform der Erfindung sieht vor, dass wenigstens eine Vorrichtung zur Bestimmung der Position der Membran innerhalb der Außenhülle vorhanden ist.

Eine weitere Ausgestaltung der Erfindung sieht vor, dass eine Auswerteeinheit zur Berechnung des Gasvolumens des ersten und/oder des zweiten Gasraums vorhanden ist, wobei die Auswerteeinheit die von der Vorrichtung ermittelten Positionswerte der Membran für die Berechnung des Gasvolumens oder der Gasvolumina verwendet.

Eine Anzeigevorrichtung zeigt die von der Auswerteeinheit berechneten Werte des Gasvolumens oder der Gasvolumen an.

Die von der Vorrichtung berechneten Werte können bei Bedarf auch an eine externe Anzeigevorrichtung oder ein Gerät, welches die berechneten Werte anzeigen kann, weitergeleitet werden, z.B. über eine Datenleiten oder eine Funkverbindung.

Der erfindungsgemäße Verfahren wird vorzugsweise in einem erfindungsgemäßen Gasspeicher verwendet.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung eines Gasspeichers zur Durchführung des erfindungsgemäßen Verfahrens,
- Fig. 2: der Gasspeicher von Fig. 1 ohne Füllung,
- Fig. 3: der Gasspeicher von Fig. 1 zu 40 % mit einem leichten Gas gefüllt, und
- Fig. 4: der Gasspeicher von Fig. 1 zu 100 % mit einem leichten Gas gefüllt.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen.

Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellten Figuren bezogen und sind bei einer Lageänderung sinngemäß auf die neue Lage zu übertragen.

Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

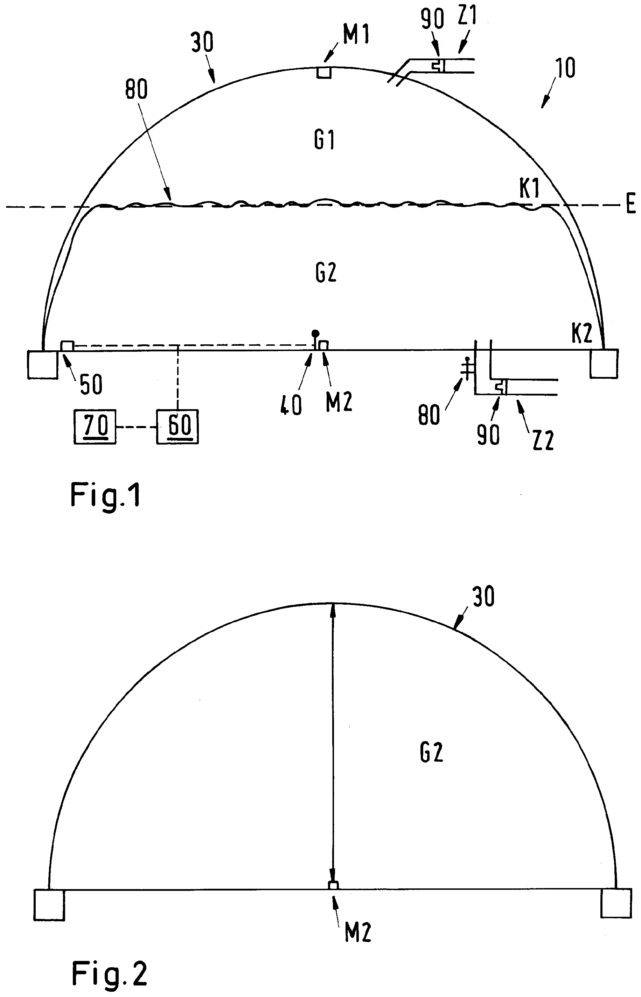

Die Figur 1 zeigt einen Gasspeicher 10 mit Außenhülle 30 zur erfindungsgemäßen Durchführung des Verfahrens. Über eine Zuleitung Z1 wird die als erster Gasraum G1 ausgeführte Kammer K1 mit einem Gas befüllt gefolgt einer Befüllung der als zweiten Gasraum G2 ausgebildeten zweiten Kammer K2 über die Zuleitung Z2. Die Membran 20 bildet nun eine Ebene E zwischen den beiden Gasräumen aus und deren Position kann mittels eines Abstandsmessers 40 gegenüber einem Messpunkt M1/M2 bestimmt werden. Eine Auswerteeinheit 60 ermittelt das Volumen und zeigt dieses auf einer Anzeigeeinheit 70 an. Die eingeleiteten Volumina werden über Vorrichtungen zur Messung des Volumenstroms 90 in den Zuleitungen ermittelt. Druckmesser 50 erlauben auch bei mit Druck beaufschlagten Gasräumen eine präzise Volumenbestimmung. Ein Rückschlagventil 80 verhindert effektiv einen Überdruck in den Gasräumen.

Die Figuren 2 bis 4 zeigen exemplarisch die Durchführung des Verfahrens an einer Ausgestaltung des Gasspeichers. In Fig. 2 ist der Gasspeicher leer, in dem Sinne, dass kein zu speicherndes Gas in ihm vorhanden ist, sondern nur Stützgas im zweiten Gasraum zur Erhaltung der Außenkontur. Der Abstand zwischen dem Messpunkt M2 und der Membran, welche an der Außenhülle 30 anliegt, ist maximal.

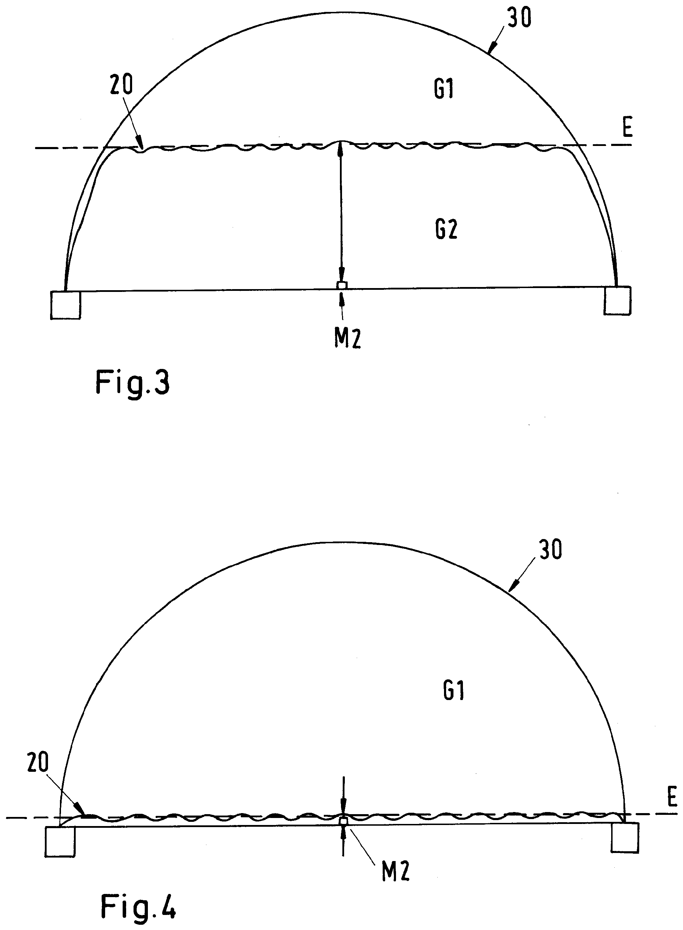

Fig. 3 zeigt den Zustand des Speichers bei ca. 40 % Füllvolumen. Der erste Gasraum G1 ist nun ausgebildet und der Abstand, der von Membran 20 aufgespannten Ebene E zum Messpunkt M2, hat sich verringert.

Fig. 4 zeigt den Gasspeicher im komplett gefüllten Zustand. Die Membran 20 liegt auf der Grundfläche des Speichers auf und der Abstand zum Messpunkt ist minimal. Die Außenhülle wird ausschließlich durch das im ersten Gasraum G1 gespeicherte Gas gestützt.

Die Erfindung ist nicht auf eine der vorbeschriebenen Ausführungsformen beschränkt, sondern in vielfältiger Weise abwandelbar.

Man erkennt, dass ein Verfahren zur Bestimmung des Volumens eines ersten Gasraums und/oder eines zweiten Gasraums in einem Gasspeicher 10 mit einer Außenhülle 30 vorgeschlagen wird. Im Rahmen dieses Verfahrens wird der von mindestens einer beweglichen Membran 20 begrenzte erste Gasraums G1 mit einem ersten Gas befüllt. Der durch die mindestens eine bewegliche Membran 20 abgegrenzte zweite Gasraum G2 wird mit einem zweiten Gas befüllt. Sobald die Gasräume befüllt sind, erfolgt eine Positionsbestimmung der den ersten Gasraum G1 und den zweiten Gasraum G2 trennenden, Membran 20. Anhand der ermittelten Positionswerte wird das Volumens des ersten Gasraums G1 und/oder des zweiten Gasraums G2 berechnet.

Für die Positionsbestimmung bildet die bewegliche Membran 20 eine Fläche aus, welche eine Ebene E definiert, wobei die Ebene E die Grenze zwischen dem ersten Gasraum G1 und dem zweiten Gasraum G2 ist oder bildet. Die Position der Membran innerhalb des Gasspeichers 10 wird zudem in Bezug auf wenigstens einen Messpunkt M1/M2 ermittelt, wobei vorzugsweise ein optisches, mechanisches, akustisches und/oder elektrisches Messverfahren verwendet wird.

Besondere Vorteile des erfindungsgemäßen Verfahren ergeben sich daraus, dass das erste Gas leichter ist als das zweite Gas, wobei der erste Gasraum G1 mit dem leichten Gas befüllt wird und wobei der zweite Gasraum G2 mit dem schweren Gas befüllt wird, so dass der zweite Gasraum G2 einen Stützgasraum für die bewegliche Membran 20 bildet.

Von Vorteil ist ferner, wenn beim Einlassen von Gas in den ersten Gasraum G1 Gas aus dem zweiten Gasraum G2 entfernt oder abgelassen wird, und wenn beim Entnehmen von Gas aus dem ersten Gasraum G1 Gas in den zweiten Gasraum G2 eingelassen wird, so dass die bewegliche Membran zwischen den Gasräumen G1, G2 stets eine im Wesentlichen ebene Fläche bildet.

Ein erfindungsgemäßer Gasspeicher 10 zum Speichern von Gas hat eine Außenhülle 30, in der zumindest zwei Kammern K1, K2 ausgebildet sind, die mittels einer Membran 20 voneinander getrennt sind. Eine erste Kammer ist als erster Gasraum G1 und eine zweite Kammer K2 ist als zweiter Gasraum G2 ausgebildet, wobei dass das Volumen zumindest eines Gasraums G1, G2 über die Position der Membran 20 innerhalb der Außenhülle 30 bestimmbar ist, vorzugsweise mit dem oben geschilderten Verfahren.

Vorteilhaft ist der erste Gasraum G1 oberhalb des zweiten Gasraums G2 ausgebildet, wobei die Membran 20 im Wesentlichen horizontal zwischen den Gasräumen G1, G2 verläuft und wobei der zweite Gasraum G2 als Stützgasraum für die Membran 20 ausgebildet ist.

Eine Vorrichtung 40 dient zur Bestimmung der Position der Membran 20 innerhalb der Außenhülle 30. Eine Auswerteeinheit 60 übernimmt die von der Vorrichtung 40 ermittelten Positionswerte und verwendet diese zur Berechnung des Gasvolumens des ersten und/oder des zweiten Gasraums G1, G2.
eine Anzeigevorrichtung 70 ist vorgesehen, um die von der Auswerteeinheit 60 berechneten Gasvolumen anzuzeigen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 10: Gasspeicher
- 20: Membran
- 30: Außenhülle
- 40: Abstandsmesser
- 50: Druckmesser
- 60: Auswerteinheit
- 70: Anzeigevorrichtung
- 80: Rückschlagventil
- 90: Volumenstrommesser

- K1: Kammer 1
- K2: Kammer 2
- G1: Gasraum 1
- G2: Gasraum 2
- E: Ebene
- M1: Messpunkt 1
- M2: Messpunkt 2
- Z1: Zuleitung 1
- Z2: Zuleitung 2

## Patentansprüche

1. Verfahren zur Volumenmessung eines ersten Gasraums (G1) und eines zweiten Gasraums (G2) in einem Gasspeicher (10) mit einer Außenhülle (30), wobei das Verfahren umfasst:
▪ Befüllen des, von mindestens einer beweglichen Membran (20) begrenzten, ersten Gasraums (G1) mit einem ersten Gas,
▪ Befüllen des, durch die mindestens eine bewegliche Membran (20) abgegrenzten, zweiten Gasraums (G2) mit einem zweiten Gas,
▪ Positionsbestimmung der, den ersten Gasraum (G1) und den zweiten Gasraum (G2) trennenden, Membran (20),
▪ Berechnung des Volumens des ersten Gasraums (G1) und/oder des zweiten Gasraums (G2) anhand der Position der Membran (20) innerhalb des Gasspeichers (10).

2. Verfahren nach Anspruch 1, **dadurch gekennzeichnet, dass** die bewegliche Membran (20) eine Fläche ausbildet welche eine Ebene (E) definiert, wobei die Ebene (E) die Grenze zwischen dem ersten Gasraum (G1) und dem zweiten Gasraum (G2) ist oder bildet.

3. Verfahren nach Anspruch 1 oder 2, **dadurch gekennzeichnet, dass** die Position der Membran innerhalb des Gasspeichers (10) in Bezug auf wenigstens einen Messpunkt (M1/M2) ermittelt wird.

4. Verfahren nach Anspruch 3, **dadurch gekennzeichnet, dass** der wenigstens eine Messpunkt (M1) durch einen höchsten Punkt des Gasspeichers (10) definiert ist, oder dass der wenigstens eine Messpunkt (M2) durch einen niedrigsten Punkt, vorzugsweise auf einer Grundfläche des Gasspeichers (10) definiert ist.

5. Verfahren nach einem der vorherigen Ansprüche, **dadurch gekennzeichnet, dass** die Position der Membran (20) über ein optisches, mechanisches, akustisches und/oder elektrisches Verfahren erfasst und/oder ermittelt wird.

6. Verfahren nach einem der vorherigen Ansprüche, **dadurch gekennzeichnet, dass** das erste Gas leichter ist als das zweite Gas, wobei der erste Gasraum (G1) mit dem leichten Gas befüllt wird und wobei der zweite Gasraum (G2) mit dem schweren Gas befüllt wird.

7. Verfahren nach einem der vorherigen Ansprüche, **dadurch gekennzeichnet, dass** der zweite Gasraum (G2) einen Stützgasraum bildet.

8. Verfahren nach einem der vorherigen Ansprüche, **dadurch gekennzeichnet, dass** eine Positionsbestimmung vor und/oder nach dem Einleiten und/oder Ausleiten eines der Gase in den Gasspeicher (10) durchgeführt wird, wobei die Gase von oberhalb und/oder unterhalb der Membran in die Gasräume (G1, G2) eingeleitet werden.

9. Verfahren nach einem der vorherigen Ansprüche, **dadurch gekennzeichnet, dass** beim Einlassen von Gas in den ersten Gasraum (G1) Gas aus dem zweiten Gasraum (G2) entfernt oder abgelassen wird.

10. Verfahren nach einem der vorherigen Ansprüche, **dadurch gekennzeichnet, dass** beim Entnehmen von Gas aus dem ersten Gasraum (G1) Gas in den zweiten Gasraum (G2) eingelassen wird.

11. Gasspeicher (10) zum Speichern von Gas, mit einer Außenhülle (30), in der zumindest zwei Kammern (K1, K2) ausgebildet sind, die mittels einer Membran (20) voneinander getrennt sind, wobei eine erste Kammer als erster Gasraum (G1) und eine zweite Kammer (K2) als zweiter Gasraum (G2) ausgebildet sind, **dadurch gekennzeichnet, dass** das Volumen zumindest eines Gasraums (G1, G2) über die Position der Membran (20) innerhalb der Außenhülle (30) bestimmbar ist.

12. Gasspeicher nach Anspruch 11 **dadurch gekennzeichnet, dass** der erste Gasraum (G1) oberhalb des zweiten Gasraums (G2) ausgebildet ist, wobei die Membran (20) im Wesentlichen horizontal zwischen den Gasräumen (G1, G2) verläuft und wobei der zweite Gasraum (G2) als Stützgasraum für die Membran (20) ausgebildet ist.

13. Gasspeicher nach Anspruch 11 oder 12, **dadurch gekennzeichnet, dass** wenigstens eine Vorrichtung (40) zur Bestimmung der Position der Membran (20) innerhalb der Außenhülle (30) vorhanden ist.

14. Gasspeicher nach einem der Ansprüche 11 bis 13, **dadurch gekennzeichnet, dass** eine Auswerteeinheit (60) zur Berechnung des Gasvolumens des ersten und/oder des zweiten Gasraums (G1, G2) vorhanden ist, wobei die Auswerteeinheit (60) die von der Vorrichtung (40) ermittelten Positionswerte der Membran (20) für die Berechnung des Gasvolumens oder der Gasvolumina verwendet.

15. Gasspeicher nach einem der Ansprüche 11 bis 14, **dadurch gekennzeichnet, dass** eine Anzeigevorrichtung (70) vorgesehen ist, welche die von der Auswerteeinheit (60) berechneten Gasvolumen anzeigt.
